Europäisches Patentamt

European Patent Office

Office européen des brevets

(11) Veröffentlichungsnummer: **0 304 546**
**A2**

# (12) EUROPÄISCHE PATENTANMELDUNG

(21) Anmeldenummer: **88107461.1**

(22) Anmeldetag: **10.05.88**

(51) Int. Cl.⁴: **H04N 1/04 , H04N 1/10**

(30) Priorität: **22.08.87 DE 3728010**

(43) Veröffentlichungstag der Anmeldung:
**01.03.89 Patentblatt 89/09**

(84) Benannte Vertragsstaaten:
**AT BE CH DE ES FR GB GR IT LI LU NL SE**

(71) Anmelder: **URW Unternehmensberatung Karow Rubow Weber GmbH**
**Harksheider Strasse 102**
**D-2000 Hamburg 65(DE)**

(72) Erfinder: **Rubow, Gerhard, Dr. rer. pol.**
**Schäperdresch 25**
**D-2000 Hamburg 65(DE)**

(74) Vertreter: **Dipl.-Ing. H. Hauck Dipl.-Phys. W. Schmitz Dipl.-Ing. E. Graalfs Dipl.-Ing. W. Wehnert Dr.-Ing. W. Döring**
**Neuer Wall 41**
**D-2000 Hamburg 36(DE)**

(54) **Zeilenabtaster zum Digitalisieren einer Vorlage.**

(57) Zeilenabtaster zum Digitalisieren einer Vorlage, mit einer Sensorzeile und einer Kopplungseinrichtung, die beim Weiterbewegen des Zeilenabtasters ein dem Ausmaß der Weiterbewegung entsprechendes Positionssignal liefert, dadurch gekennzeichnet, daß die Kopplungseinrichtung zwei Koordinatensensoren zum Zusammenwirken mit einem der Vorlage zugeordneten Koordinatennetz aufweist.

Fig. 1

EP 0 304 546 A2

## Zeilenabtaster zum Digitalisieren einer Vorlage

Die Erfindung betrifft einen Zeilenabtaster zum Digitalisieren einer Vorlage, mit einer Sensorzeile, die aus einer Reihe von Vorlagewert-Sensoren gebildet ist und bei betriebsmäßig auf der Vorlage aufgesetztem Zeilenabtaster eine abtastbare Vorlagezeile von Vorlagepunkten bestimmt und entsprechende Vorlagewertsignale erzeugen kann, und einer Kopplungseinrichtung, die bei einem Weiterbewegen des Zeilenabtasters auf der Vorlage ein dem Ausmaß der Weiterbewegung entsprechendes Positionssignal liefert.

Bei bekannten Zeilenabtastern der angegebenen Art, zum Beispiel Typ "Handy Scanner" der Firma Cameron GmbH, enthält die Kopplungseinrichtung eine in dem Zeilenabtaster parallel zur Vorlagezeile angeordnete, drehbar gelagerte Walze, die mit Reibschluß auf der Vorlage abrollbar ist, und einen mit der Walze gekoppelten Steuerimpulsgeber, der zum Beispiel pro Umdrehung der Walze $10^3$ Steuerimpulse abgibt; die Anzahl der von einer Ausgangsposition des Zeilenabtasters an gezählten Steuerimpulse bestimmt das Positionssignal. Jeder Steuerimpuls veranlaßt das Auslesen der Sensorzeile. Die ausgelesenen Impulsfolgen und das Positionssignal werden in einer Auswerteinrichtung zu einem Signalsatz verarbeitet, der ein Abbild der Vorlage darstellt. Der Signalsatz kann zum Beispiel gespeichert, weiterverarbeitet und/oder zur Erzeugung eines der Vorlage entsprechenden Schirmbildes verwendet werden. Dabei wird vorausgesetzt, daß der Zeilenabtaster ohne Abheben in der von der Walze bestimmten Rollrichtung auf der Vorlage bewegt wird. Wenn die Rollrichtung geändert wird oder der Zeilenabtaster abgehoben und an anderer Stelle oder in anderer Orientierung wieder aufgesetzt und weiterbewegt wird, ergibt sich ein verzerrtes und/oder überlagertes Abbild.

Die Erfindung geht von der Aufgabe aus, mit geringem Aufwand einen Zeilenabtaster zu schaffen, der von den beschriebenen Nachteilen frei ist, also auch bei Positions- oder Richtungsänderungen ein richtiges Abbild liefert.

Nach der Erfindung wird diese Aufgabe gelöst mit einem Zeilenabtaster der eingangs angegebenen Art, der dadurch gekennzeichnet ist, daß die Kopplungseinrichtung zwei mit einem Abstand voneinander angeordnete Koordinatensensoren zum Zusammenwirken mit einem der Vorlage zugeordneten Koordinatennetz und Liefern entsprechender Ortssignale aufweist.

Bei dem erfindungsgemäßen Zeilenabtaster ist es in einfacher Weise rechnerisch, also zum Beispiel in der Auswerteinrichtung, möglich, mit Hilfe der von den Koordinatensensoren gelieferten Ortssignale jedem aus einem Sensor der Sensorzeile ausgelesenen Impuls die richtigen Ortskoordinaten in Bezug auf das Koordinatennetz zuzuordnen. Es kann dann der erfindungsgemäße Zeilenabtaster in beliebiger Richtung über die Vorlage bewegt und/oder in beliebigen Positionen abgehoben und wieder aufgesetzt werden; stets ergibt sich ein richtiges Abbild. Durch mehrmaliges Überfahren der Vorlage kann durch Mittelwertbildung die Genauigkeit erhöht werden. Große Vorlagen können streifenweise abgetastet und in der Auswerteinrichtung zum richtigen Abbild zusammengesetzt werden. Wenn nur bestimmte Bereiche der Vorlage abgebildet werden sollen, genügt es, den Zeilenabtaster über diese Bereiche zu bewegen; es ist also nicht nötig, die Bewegung des Zeilenabtasters in einer bestimmten Ausgangsposition beginnen zu lassen.

Die Schaffung geeigneter Rechenschaltungen für die beschriebenen Rechenvorgänge ist dem Fachmann ohne weiteres möglich; es handelt sich nur um einfache Koordinatentransformationen.

Das Digitalisieren mit Hilfe eines der Vorlage zugeordneten Koordinatennetzes ist bei der Verwendung punktförmiger Sensoren bekannt, die von einem Vorlagepunkt die Koordinaten erfassen (z.B. Digitalisiergeräte der Firma Aristo, Hamburg).

Mit solchen punktförmigen Sensoren ist jedoch das Abtasten von Flächen praktisch nicht möglich. Zum Abtasten von Flächen werden neuerdings Zeilensensoren der eingangs beschriebenen Art verwendet, die aber die geschilderten Nachteile aufweisen. Erfindungsgemäß werden diese Nachteile in besonders einfacher Weise behoben; denn in der Sensorzeile brauchen wie bei bekannten Zeilenabtastern nut einfache Sensoren für einen Vorlagewert, zum Beispiel Helligkeit, vorgesehen zu werden, und zum Zuordnen von absoluten (von der Lage des Zeilenabtasters unabhängigen) Ortskoordinaten zu den Signalen aller Sensoren der Sensorzeile sind nur (mindestens) zwei Koordinatensensoren zusätzlich vorgesehen. Die Zuordnung selbst erfolgt rechnerisch in entsprechenden digitalen Schaltungen, z.B. in der Auswerteinrichtung.

Zweckmäßigerweise werden die Koordinatensensoren so angeordnet, daß ihr Abstand parallel zu der Vorlagezeile liegt. Dies ist baulich einfach und vereinfacht auch die Rechenvorgänge. Eine noch weitere Vereinfachung der Rechenvorgänge ist dadurch möglich, daß die Koordinatensensoren im Bereich der Enden der Vorlagezeile angeordnet werden.

In weiterer Ausgestaltung der Erfindung ist eine Auswerteinrichtung für den erfindungsgemäßen Zeilenabtaster vorgesehen, die durch gekennzeichnet ist, daß sie einen Ortskoordinatenrechner aufweist, der mit Hilfe der von den Koordinatensensoren gelieferten Ortsignale den Vorlagewertsignalen Koordinatensignale entsprechend dem Koordinatennetz zuordnet.

In weiterer Ausgestaltung der Erfindung kann zur Verwendung bei der beschriebenen Auswerteinrichtung ein erfindungsgemäßer Zeilenabtaster bekannter Weise mit einer in dem Zeilenabtaster drehbar gelagerten, mit Reibschluß auf der Vorlage abrollbaren Walze sowie Mitteln zum Erzeugen eines Positionssignals in Abhängigkeit von der Drehstellung der Walze versehen sein, wobei vorzugsweise die Drehachse der Walze parallel zu der Vorlagezeile angeordnet ist; dabei sind Schaltmittel zur wahlweisen Verarbeitung der Positionssignale der Walze anstelle der Ortssignale vorgesehen. Ein Zeilenabtaster dieser Ausführung bietet den Vorteil, daß er wie die schon beschriebenen bekannten Zeilenabtaster, die eine Walze aufweisen, wahlweise auch ohne Koordinatennetz betrieben werden kann, zum Beispiel in Fällen, bei denen ein geeignetes Koordinatennetz (in der Regel in Form eines sogenannten Digitalisiertabletts, zum Beispiel Digitalisiertafel der Firma Aristo, Hamburg) nicht zur Verfügung steht. Die Schaltmittel können im einfachsten Fall aus einem von Hand betätigbaren Umschalter bestehen. Besonders einfach ist es jedoch, wenn in Ausgestattung der Erfindung selbsttätige Schaltmittel vorgesehen sind, die z.B. bei Fehlen von Ortssignalen auf die Positionssignale der Walze umschalten. Die Schaffung derartiger selbsttätiger Schaltmittel ist dem einschlägig tätigen Durchschnittsfachmann ohne weiteres möglich.

Die Erfindung wird im folgenden anhand von Ausführungsbeispielen in Verbindung mit der Zeichnung näher beschrieben.

Figur 1 ist eine schematische Darstellung nach Art einer Draufsicht auf einen erfindungsgemäßen Zeilenabtaster mit abgenommener Gehäuse-Oberwand.

Figur 2 ist eine schematische Schnittansicht des in Figur 1 dargestellten Zeilenabtasters entlang der Linie II-II.

Figur 3 ist eine der Figur 1 entsprechende Darstellung einer anderen Ausführungsform.

Figur 4 ist eine der Figur 2 entsprechende schematische Schnittansicht des Zeilenabtasters nach Figur 3 entlang der Linie IV-IV.

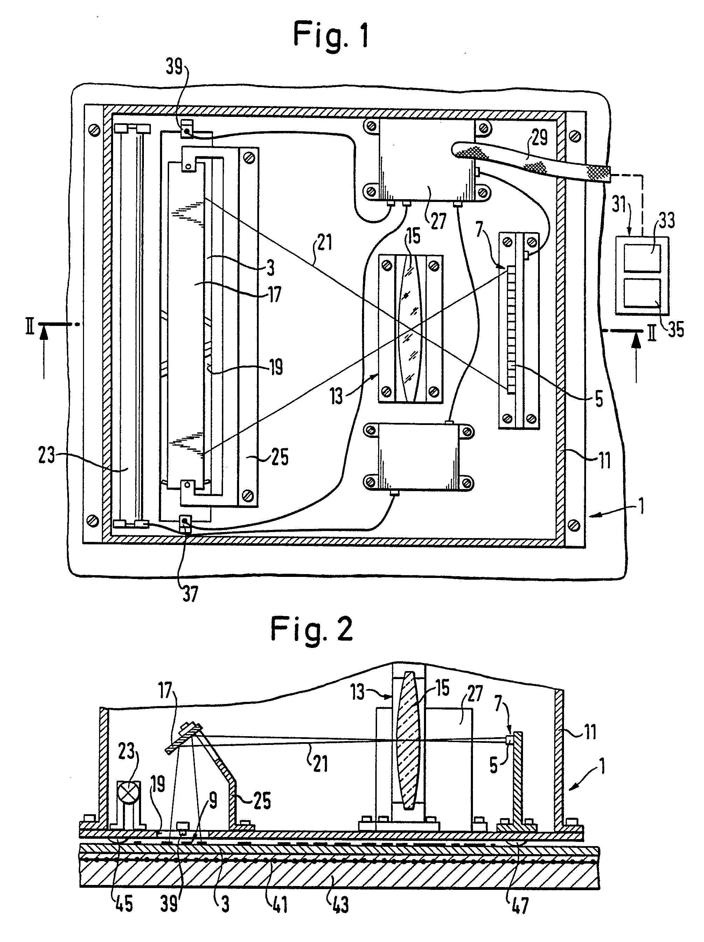

Figur 1 zeigt einen Zeilenabtaster 1 betriebsmäßig auf eine Vorlage 3 aufgesetzt, die bei der dargestellten Ausführungsform von einer Strichzeichnung gebildet wird. Der Zeilenabtaster 1 hat eine Anzahl von optisch-elektrischen Sensoren 5, die in einer Sensorzeile 7 nebeneinander angeordnet sind und von einer entsprechenden Anzahl von Vorlagepunkten, die eine Vorlagezeile 9 bilden, Vorlagewertsignale liefern. Im einfachsten Fall sind die Sensoren 5 Photodioden, und als Vorlagewerte werden Helligkeitswerte erfaßt. Bei der dargestellten Ausführungsform ist die Sensorzeile 7 in der üblichen Weise geschützt im Inneren eines Zeilenabtastergehäuses 11 angeordnet und wird mittels eines Objektivs 13, das in den Figuren vereinfacht als Sammellinse 15 dargestellt ist, und eines ebenen Spiegels 17 durch einen Gehäuseschlitz 19 auf die Vorlage 3 als Vorlagezeile 9 abgebildet. Der Abbildungs-Strahlengang 21 ist schematisch angedeutet. Eine Beleuchtungseinrichtung 23 beleuchtet die Vorlage im Bereich der Vorlagezeile 9. Eine Halterung für den Spiegel 17 dient gleichzeitig als optische Abdeckung 25 der Beleuchtungseinrichtung 23. Die von den Sensoren 5 gelieferten Vorlagewertsignale können durch Ansteuern einer Ausleseschaltung 27 als Impulsfolge ausgelesen werden. Ein flexibles Kabel 29 verbindet den Zeilenabtaster 1 mit einer Auswerteinrichtung 31, die die Stromversorgung des Zeilenabtasters 1 übernimmt und die ausgelesenen Impulsfolgen verarbeitet, beispielsweise zu einem Signalsatz, der ein Abbild des abgezeichneten Bereichs der Vorlage 3 darstellt und zum Beispiel in einem Bildspeicher 33 gespeichert wird. Bei der dargestellten Ausführungsform enthält die Auswerteinrichtung 31 ferner einen Bildschirm 35, auf dem der Inhalt des Bildspeichers 33, d.h. das Abbild, als Schirmbild sichtbar dargestellt werden kann.

Der Zeilenabtaster 1 hat zwei mit Abstand voneinander angeordnete Koordinatensensoren 37 und 39, die bei der dargestellten Ausführungsform im Bereich der Enden des Gehäuseschlitzes 19 angeordnet sind, also an den Enden einer über der Vorlagezeile 9 liegenden gedachten geraden Linie. Die Koordinatensensoren 37, 39 wirken mit einem der Vorlage 3 zugeordneten Koordinatennetz 41 zusammen und liefern entsprechende Ortssignale. Bei der dargestellten Ausführungsform ist das Koordinatennetz 41 in Form eines Drahtgitters in einem Digitalisiertablett 43 vorgesehen, auf dem die Vorlage 3 befestigt ist. Derartige Digitalisiertabletts sind bekannt (zum Beispiel Digitalisierplatte der Firma Aristo Graphic Systeme GmbH & Co. KG, Hamburg).

Durch das Zusammenwirken der Koordinatensensoren 37, 39 mit dem Koordinatennetz 41 werden im Zusammenwirken mit der Ausleseschaltung 27 und/oder der Auswerteinrichtung 31 periodisch Ortssignale mit so hoher Wiederholungsfrequenz geliefert, daß eine von Hand durchgeführte Bewegung des Zeilenabtasters 1 auf der Vorlage 3 in einer für die gewünschte Arbeitsgenauigkeit genügend großen Anzahl von Koordinatensignalen für die Sensoren der Sensorzeile 7 wiedergegeben wird. Um das Bewegen des Zeilenabtasters 1 auf der Vorlage 3 zu erleichtern, sind bei der dargestellten Ausführungsform an der Unterseite des Zeilensensors 1 flache Gleitballen 45, 47 vorgesehen.

Zweckmäßigerweise wird die Sensorzeile 7 jeweils im wesentlichen gleichzeitig mit der Bildung der Ortssignale ausgelesen, um hohe Abtastgeschwindigkeiten zu ermöglichen.

In der Auswerteinrichtung 31 werden den aus der Sensorzeile 7 ausgelesenen Vorlagewertsignalen Koordinatensignale nach Maßgabe der von den Koordinatensensoren 37, 39 gelieferten Ortssignale zugeordnet und an entsprechenden Speicherplätzen des Bildspeichers 33 als Abbild der Vorlage gespeichert. Deshalb kann der Zeilenabtaster 1 beliebig auf der Vorlage bewegt werden; es werden stets die Vorlagewertsignale mit den richtigen Koordinaten im Bildspeicher 33 abgelegt. Bei Ausfall der Ortssignale von den Sensoren 5 werden keine Vorlagewertsignale im Bildspeicher 33 abgelegt.

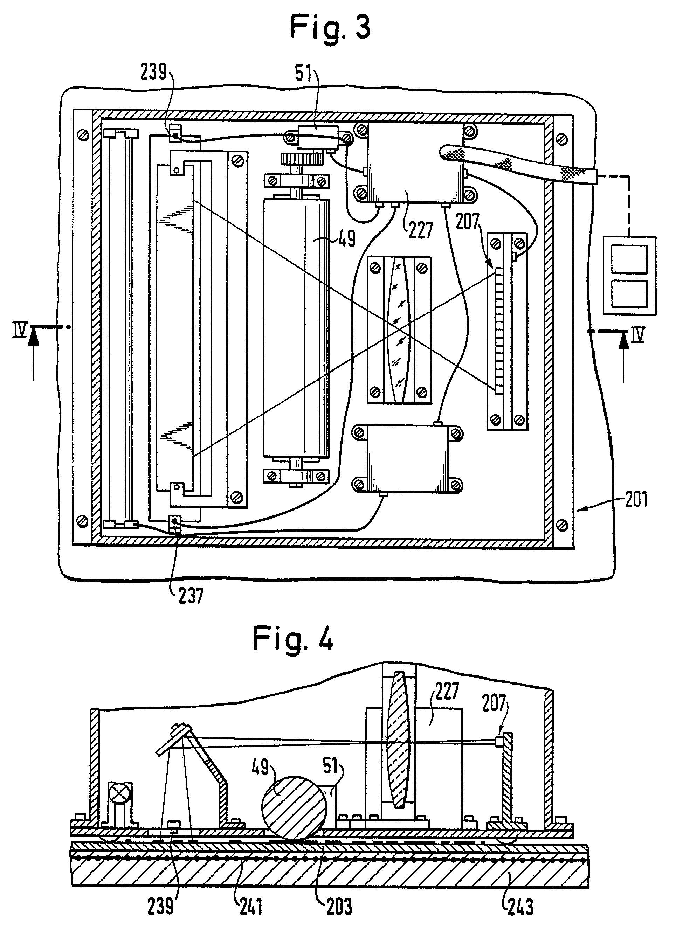

Figuren 3 und 4 zeigen eine etwas abgewandelte Ausführungsform. Für Teile, die bereits bei der Ausführungsform gemäß Figuren 1 und 2 beschrieben wurden, werden die gleichen Bezugszeichen wie dort, jedoch unter Voranstellung der Ziffer 2, verwendet; insoweit wird, um Wiederholungen zu vermeiden, auf die vorstehende Beschreibung zu Figuren 1 und 2 verwiesen.

Bei der Ausführungsform nach Figur 2 enthält der Zeilenabtaster 201 eine Walze 49, die auf der Vorlage 203 mit Reibschluß abrollbar ist. Mit der Walze 49 ist ein Impulsgeber 51 gekoppelt, der für jedes vorgegebeneWinkelinkrement der Drehung der Walze 49 einen Impuls liefert, zum Beispiel $10^3$ Impulse pro Umdrehung der Walze 49. Wenn der Zeilenabtaster 201 von einer vorgegebenen Ausgangsposition aus bewegt wird, stellt die Anzahl dieser Impulse ein Positionssignal dar, das das Ausmaß der Weiterbewegung des Zeilenabtasters 201 auf der Vorlage 203 angibt.

Der Impulsgeber 51 steuert ferner die Ausleseeinrichtung 227, so daß zu jedem Positionssignal eine Folge von Vorlagewertimpulsen aus der Sensorzeile 207 ausgelesen wird. Insoweit entspricht die Ausführung nach Figuren 3 und 4 bekannten Zeilenabtastern und ist vorzugsweise auch wie diese funktionsfähig. Zusätzlich sind jedoch wieder zwei Koordinatensensoren 237, 239 vorgesehen, die mit einem der Vorlage 203 zugeordneten Koordinatennetz 241 zusammenwirken und entsprechende Ortssignale bezüglich des Koordinatennetzes 241 liefern. Diese Ortssignale können dazu dienen, die von der Walze 49 gelieferten Positionssignale (Drehwinkel der Walze) zu korrigieren, so daß den Vorlagewertsignalen richtige Koordinaten bezüglich des Koordinatennetzes 241 zugeordnet werden. Stattdessen kann auch bei Vorliegen von Ortssignalen aus den Koordinatensensoren 237, 239 das von dem Impulsge ber 51 gelieferte Positionssignal ganz unberücksichtigt bleiben; dafür geeignete Schaltmittel können vom Fachmann ohne weiteres geschaffen werden.

Die Ausführungsformen nach Figuren 3 und 4 hat den Vorteil, daß sie auch in bekannter Weise ohne Koordiantennetz 241 benutzt werden kann, zum Beispiel wenn kein Digitalisiertablett 243 verfügbar ist. Dabei bleiben dann die Koordinatensensoren 237, 239 funktionslos, und nur die aus der Drehung der Walze 49 gewonnenen Positionssignale werden dazu verwendet, den ausgelesenen Vorlagewertsignalen Ortskoordinaten zuzuordnen. In jedem Fall hat die Ausführungsform nach Figuren 3 und 4 den Vorteil, daß die örtliche Dichte der gewonnenen Vorlagewertsignale unabhängig von der Bewegungsgeschwindigkeit des Zeilenabtasters 201 ist.

## Ansprüche

1. Zeilenabtaster (1) zum Digitalisieren einer Vorlage (3), mit einer Sensorzeile (7), die aus einer Reihe von Vorlagewert-Sensoren (5) gebildet ist und bei betriebsmäßig auf der Vorlage (3) aufgesetztem Zeilenabtaster (1) eine abtastbare Vorlagezeile (9) von Vorlagepunkten bestimmt und entsprechende Vorlagewertsignale erzeugen kann, und einer Kopplungseinrichtung, die beim Weiterbewegen des Zeilenabtasters (1) auf der Vorlage (3) ein dem Ausmaß der Weiterbewegung entsprechendes Positionssignal liefert, dadurch gekennzeichnet, daß die Kopplungseinrichtung zwei mit einem Abstand voneinander angeordnete Koordinatensensoren (35, 37) zum Zusammenwirken mit einem der Vorlage (3) zugeordneten Koordinatennetz (41) und Liefern entsprechender Ortssignale aufweist.

2. Zeilenabtaster nach Anspruch 1, dadurch gekennzeichnet, daß der Abstand parallel zu der Vorlagezeile (9) angeordnet ist.

3. Zeilenabtaster nach Anspruch 2, dadurch gekennzeichnet, daß die Koordinatensensoren (35, 37) im Bereich der Enden der Vorlagezeile (9) angeordnet sind.

4. Auswerteinrichtung für den Zeilenabtaster nach einem der vorhergehenden Ansprüche, dadurch gekennzeichnet, daß sie einen Ortskoordinatenrechner aufweist, der mit Hilfe der von den Koordinatensensoren (35, 37) gelieferten Ortssignale den Vorlagewertsignalen Koordinatensignale entsprechend dem Koordinatennetz (41) zuordnet.

5. Zeilenabtaster nach einem der Ansprüche 1 bis 3 mit einer Auswerteinrichtung nach Anspruch 4 und einer in dem Zeilenabtaster (201) drehbar gelagerten, mit Reibschluß auf der Vorlage (203) abrollbaren Walze (49) sowie Mitteln zum Erzeugen eines Positionssignals in Abhängigkeit von der Drehstellung der Walze (49), wobei vorzugsweise die Drehachse der Walze (49) parallel zu der Vorlagezeile (9) angeordnet ist, gekennzeichnet durch Schaltmittel zur wahlweisen Verarbeitung der Positionssignale der Walze anstelle der Ortssignale.

6. Zeilenabtaster und Auswerteinrichtung nach Anspruch 5, gekennzeichnet durch selbsttätige Schaltmittel, die bei Fehlen von Ortssignalen auf die Positionssignale der Walze umschalten.

EP 0 304 546 A2

# Fig. 1

# Fig. 2

# Fig. 3

# Fig. 4